Europäisches Patentamt

European Patent Office

Office européen des brevets

(19)

(11) EP 0 811 970 A2

(12) EUROPEAN PATENT APPLICATION

(43) Date of publication:
10.12.1997 Bulletin 1997/50

(51) Int Cl.$^6$: **G11B 7/085**, G11B 7/00,
G11B 7/09

(21) Application number: 97303721.1

(22) Date of filing: 02.06.1997

(84) Designated Contracting States:
**AT BE CH DE DK ES FI FR GB GR IE IT LI LU MC
NL PT SE**
Designated Extension States:
**AL LT LV RO SI**

(30) Priority: **04.06.1996 JP 141513/96
19.06.1996 JP 158028/96**

(71) Applicant: **CANON KABUSHIKI KAISHA
Tokyo (JP)**

(72) Inventor: **Naito, Yuichi
Ohta-ku, Tokyo (JP)**

(74) Representative:
**Beresford, Keith Denis Lewis et al
BERESFORD & Co.
2-5 Warwick Court
High Holborn
London WC1R 5DJ (GB)**

(54) **Optical information apparatus and method of use**

(57)    An optical apparatus for recording information on and reproducing information from an optical recording medium 9c includes a carriage 403 for carrying the recording medium 9c. An oscillatory wave driving apparatus 128 is arranged to move the carriage 403 in opposite directions so as to cause a recording or reproducing light beam to move in said opposite directions over the recording medium 9c thereby effecting tracking. The relationship between the control signals used by the control means for the oscillatory wave driving apparatus 128 and the velocity of the carriage 403 for each of said opposite directions is determined and used to modify the control signals.

FIG.7

**Description**

BACKGROUND OF THE INVENTION

Field of the Invention

The present invention relates to an optical information apparatus for performing at least one of the functions of optically recording and reproducing information, and a method of use of such an apparatus.

Related Background art

Recently, attention has been paid to optical information apparatuses which perform at least one of the functions of optically recording and reproducing information by irradiating a recording medium with a light beam. The recording medium on which the information is recorded and from which the information is reproduced may be of a disk type, a card type or a tape type. A card type recording medium (referred to as an optical card hereinafter) particularly excels in productivity, portability and access characteristics, as well as having wide usage.

Recording of optical information on a recording medium may be executed as follows. A microspot type light beam modulated according to recording information is scanned along the information tracks, and the information is recorded as an information bit row capable of being optically detected.

When the information is reproduced from the recording medium, a uniform light spot having a low power so as not to make another recording is scanned along the information bit row, and the reflected or transmitted light is detected to reproduce the recording information based on the detected signals. Optical heads used for such recording and reproducing are constituted such that the optical head is capable of moving relative to the recording medium along the information track direction and across the tracks. According to the relative movement along both directions, the light spot accesses a desired information track and scans along the information track.

An objective lens for condensing the light beam is provided on the optical head. The objective lens is retained on the optical head such that the objective lens can independently move along the direction of the optical axis (focusing direction) and a direction which is transverse to the direction of the information track along the recording medium (tracking direction). Such objective lenses are generally retained using an elastic member. The movement of the objective lens in the focusing direction and the tracking direction is generally caused by a magnetic actuator.

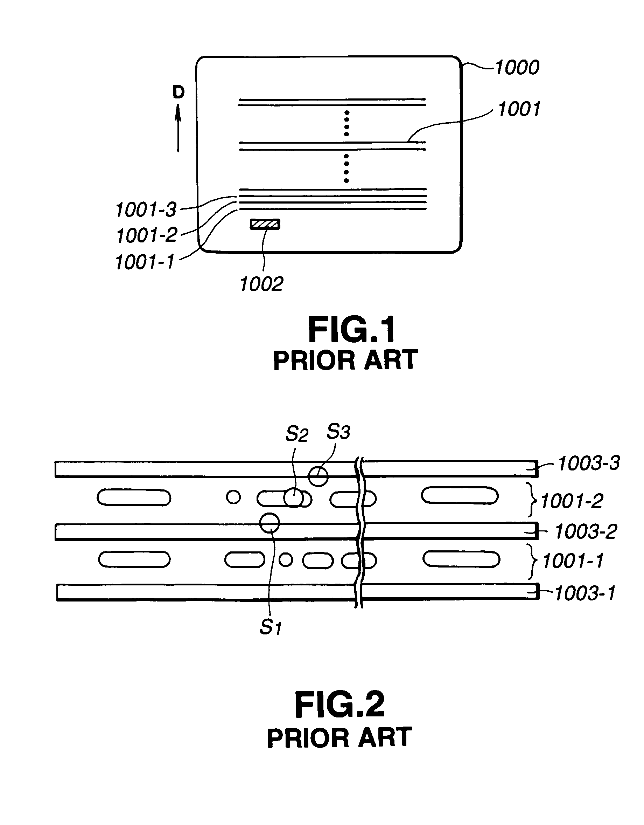

Figure 1 shows a schematic plan of an overwriting type optical card. In Figure 1 many information tracks 1001 are provided on the information recording surface parallel to the long edge of the optical card 1000.

A home position 1002 which acts as a standard position to access the information track 1001 is provided on the information recording surface. The information tracks 1001 are marked from the home position side as 1001-1, 1001-2, 1001-3 ---.

As shown in Figure 2, tracking tracks 1003-1, 1003-2, 1003-3 --- are provided in the neighbourhood of each information track 1001. These tracking tracks are used as a guide to control the light spot, so as not to deviate from a proper information track, using auto tracking (referred to as AT hereinafter) when light spot scanning is executed.

Such AT control is executed as follows. The aberration between the light spot and the information track is detected and the detected information is used to provide negative feedback. That is to say, the objective lens is moved in the tracking direction (D direction in Figure 1) so as not to deviate the light spot from the proper information track.

When the light spot is scanned along the information track during information recording or reproducing, an auto focus control (referred to as AF hereinafter) is executed in order to make the light beam focus an adequate size spot shape on the optical card surface. Such AF control is executed as follows. Aberration (AF aberration) between the position of the light spot and a correctly focused point is detected and the detected signals are used to provide negative feedback to a focus actuator which moves the objective lens along the optical axis. Then the objective lens is moved in the focusing direction of the optical head such that the light spot is focused on the recording surface of the optical card.

In Figure 2, S1, S2, S3 illustrate light spots formed on the information track of the optical card 1000. In this case, the AT control is executed by using light spots S1 and S3 which are partly located on tracking tracks 1003-2 and 1003-3. The AF control, the formation of the information bits during the recording period, and the reading of the information bits during the reproducing period are all executed using light spot S2. Both light spots S1, S2 are produced on the optical card 1000 using one or more light sources. In the case of one light source, light spots S1 and S3, which are located on either side of the light spot S2 at the same distance from S2, are formed by interaction of the light beam from the light source with a diffraction grating provided between the light source and the objective lens.

The light beam from a light source, for example a semiconductor laser may be scanned along the information track of the optical card 1000 or caused to access a desired information track of the optical card 1000, by for example fixing the optical card 1000 to a carriage capable of moving in a direction across the track. The optical head goes along the tracks by driving a voice coil motor to scan the light beam of the optical head on the information track. The light beam of the optical head is moved to the desired track by moving the carriage in a direction perpendicular to the tracks using, for example, an oscillatory wave driving apparatus.

In such an apparatus, the carriage is moved along the cross track direction in order to firstly access the light beam to the desired track and secondly to revise the skew. The skew revision enables adjustment of differences of alignment between the track on the optical card and the direction in which the optical head traverses the card. This difference occurs when the optical card is not put on the carriage properly.

The construction and driving principle of an oscillatory wave driving apparatus used for driving the carriage toward the cross track direction will now be briefly explained. An elastic member composed of a low vibration damping metal, for example one side of an elastic member which has an elongate oval shape is fixed to a piezoelectric device using an adhesive etc, to form a vibrator. A ring shaped rotator is brought into contact with the vibrator via a pressure means.

The piezoelectric device comprises two groups of piezoelectric elements, A and B, separated at an odd multiple of a 1/4 wave length from each other. In each group, the piezoelectric elements have different polarization directions in the thickness direction at intervals of half the wavelength. A cyclic voltage, such as an alternating voltage which has a 90 degree phase shift is applied to the two piezoelectric device groups A and B to excite standing waves. These standing waves are synthesized to form travelling-waves which cause surface particles in the elastic member to create an elliptical motion in a plane along the thickness direction. The rotator thus rotates by means of a friction drive, a mechanical linkage between the rotator and carriage causing linear movement of the carriage

An alternative type of oscillatory wave driving apparatus is disclosed in EP-A-0617415 (the contents of which are incorporated herein by reference)

This document discloses an ultrasonic motor in which two running track shaped motor units, each comprising a pair of vibrators, are placed at each major surface of an optical card. Each vibrator comprises a comb shaped elastic vibrator bonded to a piezoelectric element comprising A phase and B phase piezoelectric segments, with the A phase and B phase segments being arranged on the surface of the comb structure opposing the teeth of the comb structure at alternate positions corresponding to the alternate teeth of each comb structure.

Voltages having a phase difference of 90 degrees are applied to the respective A and B phase piezoelectric segments so as to produce travelling waves by the combination of the vibrations of the phases. This produces an elliptic motion having an inclination to the wave front of the travelling waves, such that the teeth portions of the vibrators in contact with the optical card produces a propulsive force on the optical card, thereby moving the optical card.

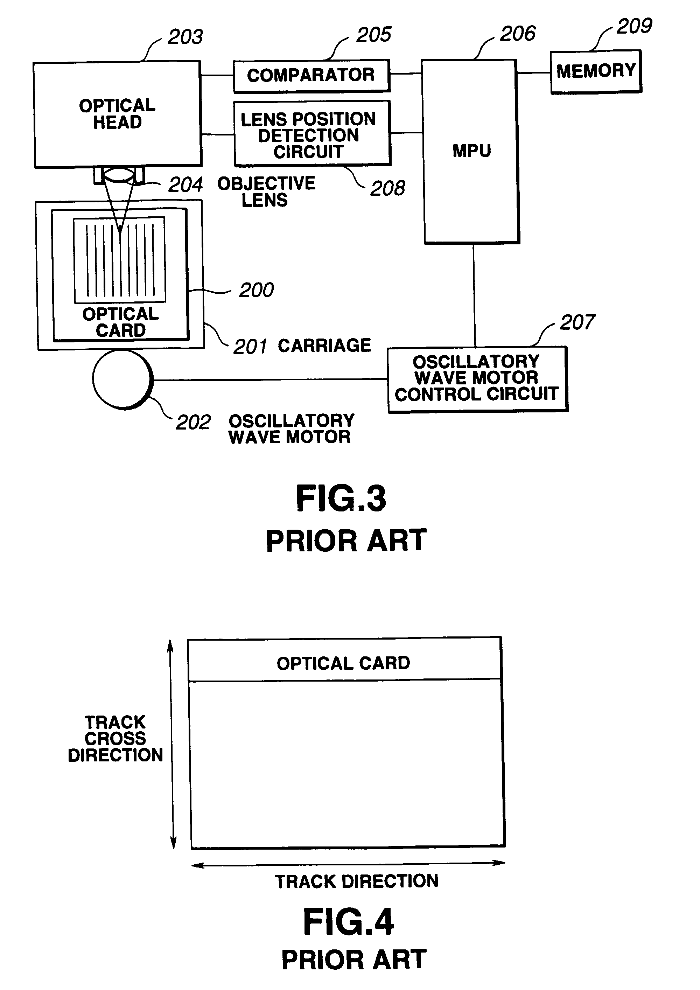

Figure 3 is a schematic view showing an optical card in a recording / reproducing apparatus. In Figure 3, 200 denotes an optical card used as an information recording medium. The carriage 201 is arranged to move the optical card relative to the light spot produced by an optical head 203 by means of an oscillatory wave motor 202. The oscillatory wave motor is controlled by an oscillatory wave motor controlling circuit 207. The oscillatory wave motor 202 is arranged to move the optical card 200 in the cross track direction to enable tracking to a desired track and not to cause the tracking to deviate where the tracks of the optical card are skewed as shown in Figure 4.

The optical head 203 includes an integrated semiconductor laser as a light source and a photoelectric conversion device arranged to detect light reflected from the card 200. An objective lens 204 is arranged to focus the light beam on the optical card 200. A comparator 205 is arranged to compare cross track signals output from the optical head 203, and to produce an input into MPU 206.

A lens position detection circuit 208 is arranged to output a signal representative of the difference between the position of the objective lens 204 and the centre of the optical head 203 into MPU 206. A memory device 209 is arranged to memorise the voltage output into the oscillatory wave motor control circuit 207 and the velocity of the carriage 201.

The transfer of the light beam from one information track of the optical card 200 to another information track using seek control will now be explained. When the desired information track is outside the movable range of the objective lens 204 of the optical head 203, MPU 206 outputs an order to drive the oscillatory wave motor 202 using the oscillatory wave motor control circuit 207. The oscillatory wave motor control circuit 207 outputs a driving voltage at a predetermined driving frequency and wave length beforehand into the oscillatory wave motor 202 to drive the carriage 201 carrying the optical card 200.

The information tracks of the optical card 200 therefore move in the information track cross direction relative to the position of the light beam focused by the objective lens 204. Whenever the light beam crosses over an information track, the optical head 203 outputs a cross track signal through the comparator 205 to the MPU 206. When the number of input pulses from the comparator reaches a predetermined level, the MPU 206 outputs an order to the oscillatory wave motor control circuit 207 which stops driving of the oscillatory wave motor 207. Then the oscillatory wave motor control circuit 207 stops the output of a driving voltage to stop the carriage 201 at the desired information track. Thus the light beam can move to the desired information track.

Relative micromovement of the carriage 201 will now be explained. Suppose that when the optical card 200 has a skew angle e as shown in Figure 4. The objective lens 204 is caused to move, in an auto tracking condition, to its right or left movable limit from the centre of the optical head 203. In this case, the immediate position of the objective lens 204 is output through the lens position detection circuit 208 to MPU 206. The MPU 206 determines the movable limit to output a drive voltage having a certain driving frequency and amplitude, which makes the velocity of the carriage slower than a predetermined velocity of the carriage during the seek control to the oscillatory wave motor 202. Then the MPU 206 orders movement of the carriage 201 such that the objective lens 204 is located at the centre of the optical head 203.

When the information tracks of the optical card 200 start to move, the objective lens 204 starts moving in the same direction because the objective lens 204 is in an auto tracking condition. When the objective lens 204 moves to the centre position of the optical head 203, the MPU 206 orders that the oscillatory wave motor control circuit 207 stops outputting a drive voltage to the oscillatory wave motor 202 because the MPU 206 is input with the position of the objective lens 204 through the lens position detection circuit 208. Movement of the light beam to the information tracks, and revision of the relationship of the position between the light beam and the information tracks are executed in such a way.

In case there is a change in the relation between the drive frequency and the velocity after the optical card 200 has been loaded, and before the optical head 203 records information on the optical card 200 or information is reproduced from the optical card 200, the carriage 201 is moved in the cross track direction by the oscillatory wave motor 202 in the autofocus condition, and the velocity of the carriage 201 is detected based on the information cross track signals output from the optical head 203. The voltage of the oscillatory wave motor 202 output into the oscillatory wave motor control circuit 207 and the velocity of the carriage 201 are memorised in the memory device 209, a series of such operations being executed such that the drive frequency is increased or decreased in a predetermined range. After that, where information is recorded on or reproduced from the optical card 200, the voltage signals sent to the oscillatory wave motor control circuit 207 are revised referring to data in the memory device 209.

The relation between the drive frequency of the oscillatory wave motor 202 and the velocity of the carriage is changed based on circumstantial conditions such as apparatus, temperature, humidity, changes with the passage of time etc. Therefore if the same drive frequency and voltage for driving the oscillatory wave motor are used, the same velocity is not obtained. In optical information recording / reproducing apparatuses, usually, when a carriage carrying an optical card moves very slowly, i.e. during micromovement in a direction which is perpendicular to the tracks in the tracking condition where the AT control is on the velocity of the carriage becomes larger and the AT error exceeds an acceptable limit. Deviation of the light beam from a track occurs, and it becomes impossible to record or reproduce information on or from the optical card. On the other hand, if the velocity of the carriage is too small, the distance moved per time unit becomes small and it is impossible to obtain enough range of movement.

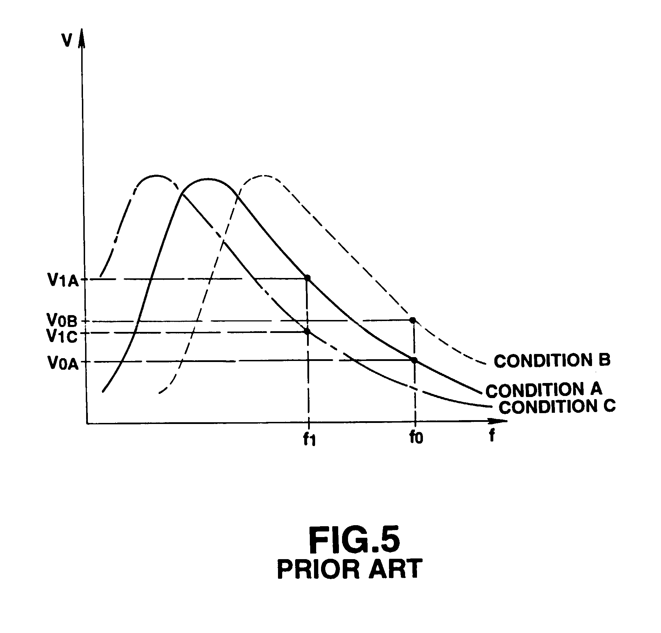

Figure 5 shows the relation between the drive frequency f and the velocity v of the oscillatory wave motor 202. In Figure 5, curve A, curve B and curve C are respectively velocity curves based on an apparatus difference, an environmental condition, and a change with the passage of time. In condition A, the velocity is $V_{OA}$ at drive frequency $f_o$. In condition B, the velocity is $V_{OB}$ at drive frequency $f_o$. The velocity is changed at the same drive frequency.

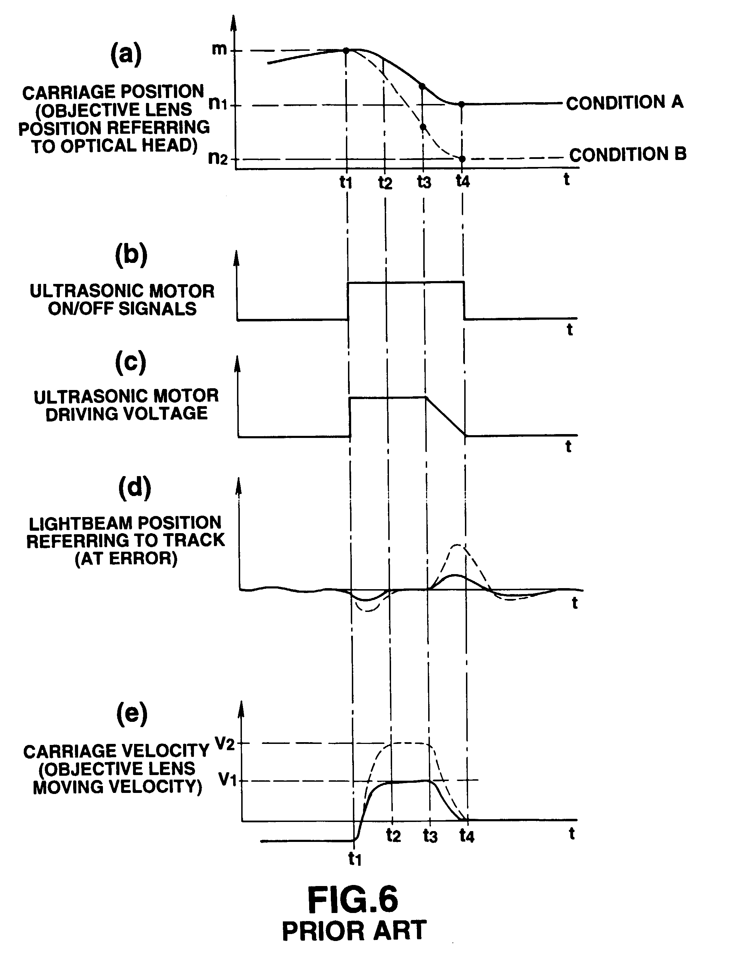

Figure 6 shows the change of position of the carriage 201 as the carriage moves along the cross track direction, the corresponding ON/OFF signals to the oscillatory wave motor and the drive voltages applied to the oscillatory wave motor, AT error signals and the velocity of the carriage. The conditions A and B in Figure 6 correspond to conditions A and B in Figure 5. When the oscillatory wave motor 201 is in the condition A, the carriage starts moving at time $t_1$ and stops at $n_j$ at time $t_4$ as indicated in Figure 6(a).

When the oscillatory wave motor 207 changes into the condition B based on the environmental change, the characteristics of the oscillatory wave motor changes.

If the oscillatory wave motor is driven using the same drive frequency, the velocity increases as shown in Figure 6(e) and the carriage stops at $n_2$ as shown in Figure 6(a). At that time, the velocity of the carriage 201 becomes larger and the velocity slows down from the large velocity. Thus the AT error signals become larger and the deviation of the light beam from the track becomes larger so as not to enable accurate recording and reproducing.

In the seek operation, as an operation at high velocity is needed compared to a carriage micromoving operation, the drive frequency $f_1$ is used in the condition A shown in Figure 5, and the desired carriage velocity $V_{1A}$ is obtained. However if the relation between the drive frequency and the velocity of the carriage is changed as in the condition C shown in chain line, at drive frequency $f_1$, the velocity of the carriage becomes just $V_{1C}$ and it is not enough. Therefore it takes a long time to seek the desired track. On the other hand, measurement of the relationship between output into the oscillatory wave motor control circuit and the velocity of the carriage can not be executed before the optical card is loaded into the carriage of the optical information recording / reproducing apparatus. If the optical card is not in the optical information recording / reproducing apparatus, it is impossible to revise the output voltage to the oscillatory wave motor control circuit.

The Applicant has proposed an optical information recording / reproducing apparatus to solve this problem in Japanese laid-open Patent Application, JP-A-07-287851. In this apparatus, just after power on, or whilst the card is in the "home" or start position, or before recording or reproducing, or during the reproduction of data, the oscillatory wave motor is driven using a predetermined drive voltage and drive frequency, or a plurality of frequencies, and the micromovement of the carriage or a seek operation are executed. The velocity of the carriage is detected based on changes in output of the objective lens position detection circuit, or cycle of the cross track signals, the relationship between the drive frequency f and the velocity is obtained, and a drive frequency corresponding to the desired velocity is obtained based on the relationship.

However in such an optical information recording / reproducing apparatus, if the apparatus is set such that the direction of movement of the carriage has an inclination with respect to the horizontal, so the direction of movement of the carriage has a vertical component, the load of the oscillatory wave motor is changeable based on the direction of movement of the carriage.

As the velocity of the oscillatory wave motor is changeable with respect to the load on the motor, there is a problem as to the direction in which the f - V characteristics are measured. If a driving frequency is determined to produce a desired velocity based on the f - V characteristics for measurements with movement in a first direction, this frequency may not produce the desired velocity because of the change of the load for movement in the opposite direction. Therefore when micromoving of the carriage is adopted, the velocity of the carriage becomes faster, and the AT error signal becomes larger than the acceptable limit. Accurate recording and reproducing becomes impossible, or it takes a long time to execute a seek operation.

## SUMMARY OF THE INVENTION

A purpose of this invention is to provide an optical information apparatus capable of obtaining a desired velocity of the carriage notwithstanding the setting up condition of the apparatus, and capable of obtaining stable operation.

According to one aspect of the present invention there is provided an optical apparatus for performing at least one of the functions of recording information on and reproducing information from an optical recording medium wherein means is provided for storing information relating to the control signals for a moving means for effecting relative movement of the recording or reproducing radiation beam and the medium in two opposite directions, and the moving means is controlled based on the information.

According to a second aspect of the present invention there is provided a method of effecting relative movement of a beam of radiation and an optical recording medium comprising:

determining information relating to the parameters for causing said movement at a required velocity in two opposite directions, and subsequently controlling said movement using said information.

## BRIEF DESCRIPTION OF THE DRAWINGS

A number of embodiments of the invention will now be described, by way of example only, with reference to the accompanying drawings in which:

Figure 1 is a schematic plan view of an optical card;

Figure 2 is a schematic illustration showing irradiation of a light spot on the optical card shown in Figure 1;

Figure 3 is a schematic illustration of a prior art optical information recording / reproducing apparatus;

Figure 4 is a schematic illustration of an optical card with skewed information tracks;

Figure 5 is a graph showing the relationship between the drive frequency of an oscillatory wave motor and the velocity of movement produced by the motor;

Figure 6 is a schematic illustration showing signals at various parts of the apparatus shown in Figure 3;

Figure 7 is a block diagram showing the main parts of an apparatus in accordance with a first embodiment of this invention;

Figure 8 is a signal timing chart showing signals at various parts of the apparatus shown in Figure 7;

Figure 9 is an isometric view of an optical system used in the apparatus shown in Figure 7;

Figure 10 is a schematic view of entire structure of an apparatus in accordance with the first embodiment of this invention;

Figure 11 is a schematic illustration for explanation of the operation of the first embodiment of this invention;

Figure 12 is a schematic illustration showing the relationship between the drive frequency of the oscillatory wave motor and the velocity of a carriage in accordance with the first embodiment of this embodiment;

Figure 13 is a block diagram showing the main structure of an apparatus in accordance with a second embodiment of this invention;

Figure 14 is a schematic illustration showing cross track signals produced in the embodiment of Figure 13;

Figure 15 is a block diagram showing the main structure of an apparatus in accordance with a third embodiment of this invention;

Figure 16 is a schematic illustration for explanation of detecting operation of a carriage velocity during L direction moving period of the carriage in accordance with the embodiment shown in Figure 15;

Figure 17 is a schematic illustration for an explanation of detecting operation of a carriage velocity during R direction moving period of the carriage in accordance with the embodiment shown in Figure 15; and

Figure 18 is a schematic illustration showing different embodiment for detecting the velocity of a carriage using a photo-interruptor.

## DESCRIPTION OF THE PREFERRED EMBODIMENTS

The preferred embodiments of this invention are explained in detail referring to the Figures as follows.

## FIRST EMBODIMENT

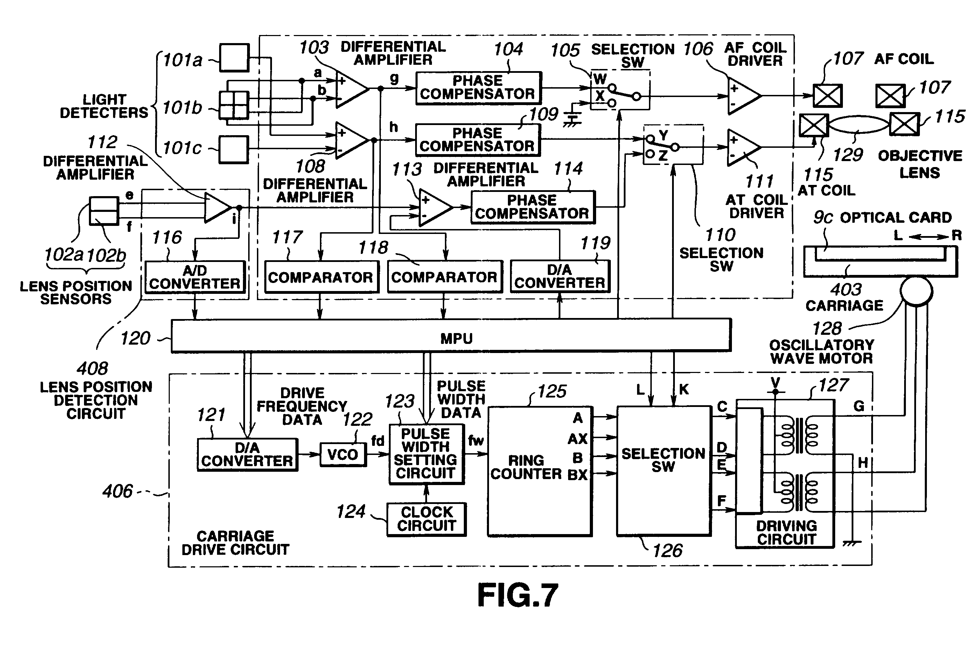

First, an example of an embodiment of an optical system which can be applied to the optical information recording and/or reproducing apparatus according to this invention is explained based on Figures 7 to 9.

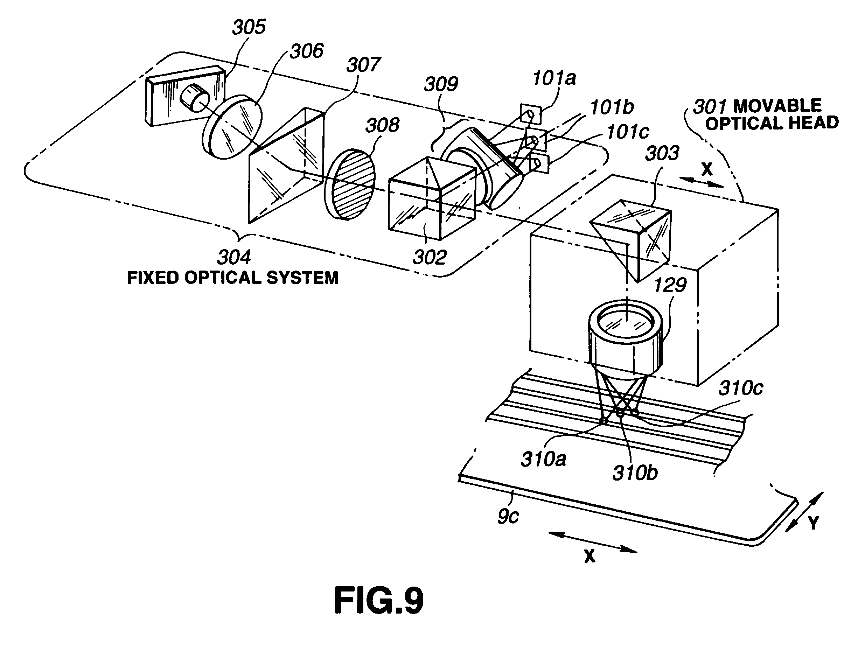

In Figure 9, a movable optical head 301 is arranged to move up and down along the X direction along a track formed along the longitudinal direction of an optical card 9c, the optical head being effective to irradiate a light beam from a fixed optical system 304 onto the surface of the optical card 9c. An objective lens 129 for condensing the luminous flux, and a reflective mirror 303 for reflecting the light beam from the fixed optical system 304 towards the objective lens 129, are provided in the movable optical head 301. The objective lens 129, is provided on the movable optical head 301 with connections to moving coils for AF and AT operations (not shown in Figures) and is moved along the optical axis by driving the moving coil for AF operation. Condensed luminous flux is formed on the optical card 9c as AT spots 310a, 310c and AF spot 310b.

The objective lens 129 is also arranged to move in a direction Y across the tracks of the optical card 9c.

The fixed optical system 304 is an optical system, which emits luminous flux for recording and reproducing of information, and detects reflected light, and is provided separately from the movable head 301. In the fixed optical system 304 there are provided a semiconductor laser 305 as a light emission source, a collimator lens 306, a shaped beam prism 307, a diffraction grating 308, a beam splitter 302, and other optical components such as an astigmatism beam-condensing lens etc. (not shown), AT light detectors 101a, 101c and an AF light detector 101b for detecting light from spots 310a, 310b and 310c which has passed through the astigmatism beam-condensing lens 309 and beam splitter 302.

Figure 7 is a block diagram showing a controlling system comprising an AF controlling system, AT controlling system, a lens position detection circuit and a carriage drive circuit, in accordance with an embodiment of an apparatus of this invention. As seen in Figure 7, the AF light detector 101b provided in the fixed optical system 304 is a 4 divided detector which detects an AF spot as the centre light from the light beam emitted from the semiconductor laser 305 and reflected from the optical card 9c. Outputs a and b, which are diagonally added output values from the four areas of the light detection 101b, are input into a differential amplifier 103. The AF error signals g output from the differential amplifier 103 are input into a phase compensator 104 and a comparator 118. The compared signals from the comparator 118 are input into MPU 120. An output from the phase compensator 104 is input into a terminal W of a selector switch 105. The selector switch 105 selects the W terminal or a X terminal based on selection signals from the MPU 120. A reference voltage is applied to the X terminal. Signals selected at the selector switch 105 go through an AF coil 106 driver and drive an AF coil 107 of an AF actuator.

The AT detectors 101a and 101c detect light emitted from the semiconductor laser 305, reflected from the optical card 9c at the AT spots at either side of the main beam spot. Outputs c and d of the AT detectors 101a and 101c are input into the differential amplifier 108. AT error signals h output from the differential amplifier 108 are input into the phase compensator 109 and the compared signals at comparator 117 are input into the MPU 120. A output of the phase compensator 109 is input into a Y terminal of a selector switch 110.

An objective lens velocity detection circuit arranged to detect the velocity of the objective lens 129 comprises a lens position detection circuit 408 comprising the differential amplifier 112 and the A/D convertor 116, and an MPU 120. Light from a light-emitting diode, provided on the movable optical head (not shown in Figures) reflected from a reflective surface provided on a side of the objective lens 129 is input into a pair of position sensors 102a and 102b. Output signals e and f of the position sensors 102a and 102b are input into a differential amplifier 112 in the lens position detection circuit 408. An output of the differential amplifier 112, constituting lens position signal i, is input into one of terminals of a differential amplifier 113 and also into an A/D convertor 116. An output of the A/D convertor 116 is input into the MPU 120.

The other input terminal of the differential amplifier 113 is connected to the MPU 120 via a D/A convertor 119. An output of the differential amplifier 113 is input into a phase compensator 114, the output of the phase compensator 114 being input into a Z terminal of a further selector switch 110. The selector switch 110 is arranged to select between a tracking servo condition (Y terminal) or a lens position servo condition (Z terminal) based on selection signals from the MPU 120. The output of the selector switch 110 is amplified by an AT coil driver 111, and the amplified output used to drive an AT coil 115 of the AT actuator to move the objective lens 129 in a direction perpendicular to the tracks of the optical card 9c.

A carriage drive circuit 406 is arranged to drive the oscillatory wave motor 128. The oscillatory wave motor 128 is of any suitable form but may be as follows. A piezoelectric element is fixed to one surface of an annular elastic member using an adhesive etc, to form a vibrator. A rotator having the same shape as the vibrator is pressed into contact with the vibrator via a pressure means.

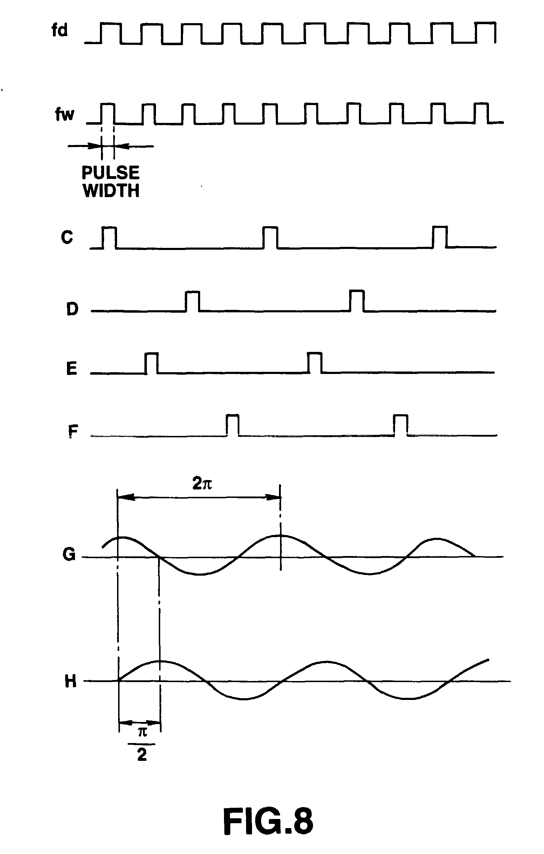

Reference is now made also to Figure 8 in which signals at each part of the carriage driving circuit 406 are shown. An input of a D/A convertor 121 is connected to the MPU 120, the D/A convertor 121 outputting an analogue voltage after receiving digital signal values from the MPU 120. An output of the D/A convertor 121 is converted into drive frequency signals fd shown in Figure 8 by voltage / frequency conversion by voltage frequency convertor (VCO) 122 to provide an input to a pulse width setting circuit 123. In the pulse width setting circuit 123, signals fw which have the desired pulse width, are formed using the pulse width data input from the MPU 120 and a clocked input from a clock circuit 124, to provide an input fw to a ring counter 125.

The signals fw are divided into four phases C, D, E, and F as indicated in Figure 8 and as will now be explained.

Signals A, Ax, B, Bx are output from the ring counter 125 into a selector switch 126, together with ON / OFF signals L and forward, backward signals K from the MPU 120. The ON / OFF signals L are drive / stop instruction signals for the oscillatory wave motor 128. The forward, backward signals K are instruction signals which determines the direction of a travelling- wave to be formed in the oscillatory wave motor 128 and thus selects the driving direction of the carriage.

On receiving these signals, the selector switch 126 selects signals A, Ax, B, Bx as phase inputs, and outputs the four phase signals C, D, E, F into a drive circuit 127 as drive phase outputs. In the drive circuit 127, the electric power is amplified in order to drive the oscillatory wave motor 128, and drive signals G and H are output into the oscillatory motor 128 as illustrated in Figure 8. The amplitude of the driving voltage of the oscillatory wave motor drive signals G, H are changed according to pulse width set at the pulse width setting circuit 123. Based on this, the velocity of the carriage driven by the oscillatory wave motor 128 is changed. For example if the pulse width is gradually reduced, the amplitude of the driving voltage is reduced accordingly, the velocity of the carriage thus becoming gradually slower.

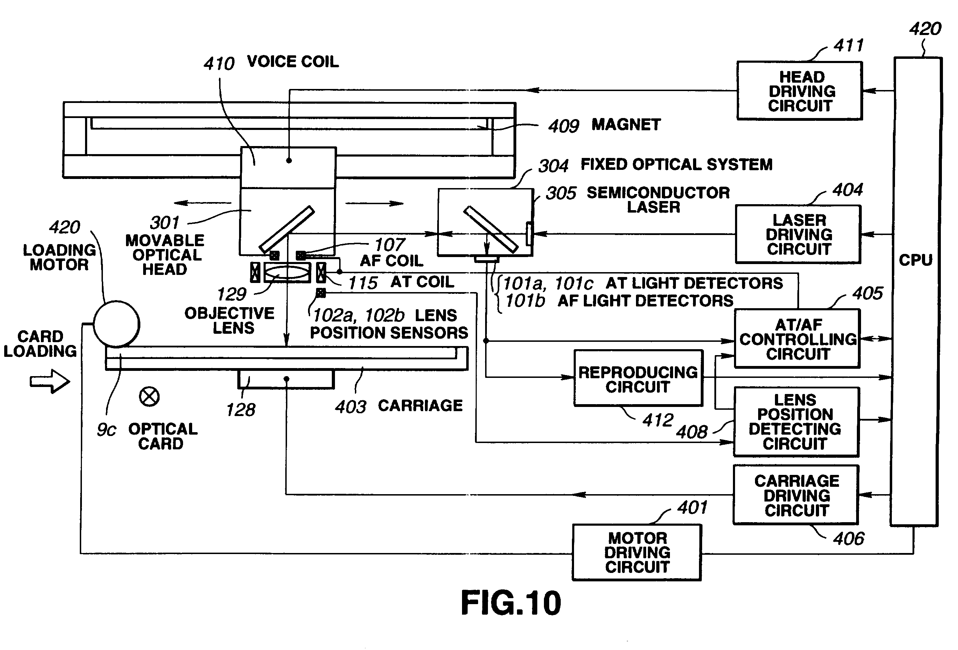

Figure 10 is a schematic illustration of the entire structure of an optical information recording / reproducing apparatus including the control system of Figure 7 and the optical head system of Figure 9.

When an optical card 9c is inserted into the apparatus, a sensor (not shown) detects the card 9c and the MPU 120 drives a loading motor 402 through a motor driving circuit 401. Therefore the optical card 9c is introduced into the apparatus, and put on the carriage 403. Receiving an instruction from the MPU 120, a laser driving circuit 404 drives the semiconductor laser 305. The luminous flux of the laser 305 is directed through the movable optical head 301, the objective lens 129 condensing the luminous flux on the optical card 9c on the carriage 403. Where an instruction is received from the MPU 120, an AT/AF controlling circuit 405 controls the AF coil 107 on movable optical head 301 such that the light beam is focused on the recording / reproducing surface of the optical card 9c using the auto-focus operation.

Initiation of autofocussing (AF) can be explained based on Figure 7. When the AF is started, a central AF light spot reflected from the optical card 9c is detected by the light detector 101b, and AF error signal g formed as the differential signal between the sensor outputs a and b is monitored at the MPU 120 through the comparator 118.

At this time, a selection signal is applied to the selection SW 105 from the MPU 120 to select the X terminal, to institute the AF starting mode and to move the objective lens 129 in a direction which is perpendicular to the surface of the card by applying a fixed electric current to the AF coil 107. Then MPU 120 detects an output of the comparator 118. As the comparator 118 outputs a signal derived from the AF focused light spot, a selection signal is transferred to the select or switch 105 from the MPU 120 to select the W terminal and to institute an AF servo mode. In such a way, the auto focusing condition is obtained. It will be appreciated that the above description of AF is executed when the light spot is on a track.

Then the AT / AF control circuit 405 controls the AT coil 115 on the movable optical head 301 based on an instruction from the MPU 120, the initiation of AT and the auto tracking being executed to obtain a tracking on to a track on the optical card 9c.

Initiation of autotracking (AT) can also explained based on Figure 7. At the beginning of the AT, selection signals are applied to selector switch 110 from the MPU 120 to select the Z terminal to obtain the AT starting mode. In this condition, lens position signals i and an output of the D/A convertor 119 instructed by the MPU 120 are transferred into the differential amplifier 113. The differentially amplified signals pass through the phase compensator 114, the AT coil driver 111 and the AT coil 115 to form the lens position servo. The objective lens 129 is slowly moved in a direction perpendicular to the track on the optical card 9c by gradually changing the output of the D/A convertor 119. On the other hand, AT error signals h output by the differential amplifier 108 go through a comparator 117, and the signals are monitored by the MPU 120. When the tracking "ON" signal is obtained, selection signals are sent from the MPU 120 to the selector switch 110 to select the Y terminal to obtain the AT servo mode. In such a way, the auto tracking (AT) condition is obtained.

A drive frequency value is then supplied to the D/A convertor 121 of the carriage driving circuit 406 from the MPU 120 to drive the oscillatory wave motor 128. By means of the carriage driving circuit 406, the rotator of the oscillatory wave motor 128 is rotated by the friction drive of a travelling-wave created by the vibrator which is converted into linear movement by a linkage (not shown) so as to move the carriage 403. If the carriage 403 is moved in the L direction (which is the up direction perpendicular to the paper surface in Figure 10), the optical card 9c also moves in the L direction perpendicular to the tracks of the card 9c, and the objective lens 129 moves in order to follow the optical card 9c because of the AT condition. At the same time, the velocity of the objective lens 129 is measured as will be explained later by the objective lens position detection circuit 408 comprising the lens position detective circuit 408 and the MPU 120. This measurement is executed at several different drive frequencies. Based on the measurement, an optimum drive frequency for making the carriage move in the L direction with a desired velocity is obtained.

After the measurement of the drive frequency for the movement in the L direction, a measurement of the drive frequency for movement in the R direction (i.e. the down direction perpendicular to the paper surface of Figure 10) is executed in the same way as that of the L direction. The above mentioned measurement is executed while the light beam is not scanning. The light beam is then scanned over the information tracks, the above mentioned measurements and operations to obtain a drive frequency for driving the oscillatory wave motor being executed before scanning for the first time. If the light beam scanning is executed before an adequate drive frequency is obtained, if there is a skew, the carriage is moved with inadequate velocity, and it becomes a cause of increasing AT error or non functioning AT. The relation between the drive frequency and the velocity of the carriage just before use is determined automatically for each direction of movement. Therefore if there is a skew of the card during the operation, a frequency control for driving the carriage with the most suitable velocity is obtained.

The output of a head driving circuit 411, which is instructed from the MPU 120, is input into a voice coil motor of a magnetic circuit comprising a magnet 409 and a voice coil 410 to scan the movable optical head 301 and thus the light beam. If it is required to record information on the card 9c during the scanning, modulation signals are applied to a semiconductor laser 305 from a laser driving circuit 404 to write on the optical card 9c with a high power light beam. If reproduction of information on the card 9c is required, output signals of an AF light detector 101b is input into a reproducing circuit 412 to reproduce information written on the optical card 9c and to output into the MPU 120. While the movable optical head 301 is scanning, if the output of the lens position detection circuit 408 becomes larger than a predetermined level, the oscillatory wave motor 128 is driven in order to keep the objective lens 129 in the predetermined range for the movable optical head 301. At this time the MPU 120 detects the direction of movement based on an output from the lens position detection circuit 408. The value of the drive frequency giving a required velocity is obtained based on the aforementioned measurement.

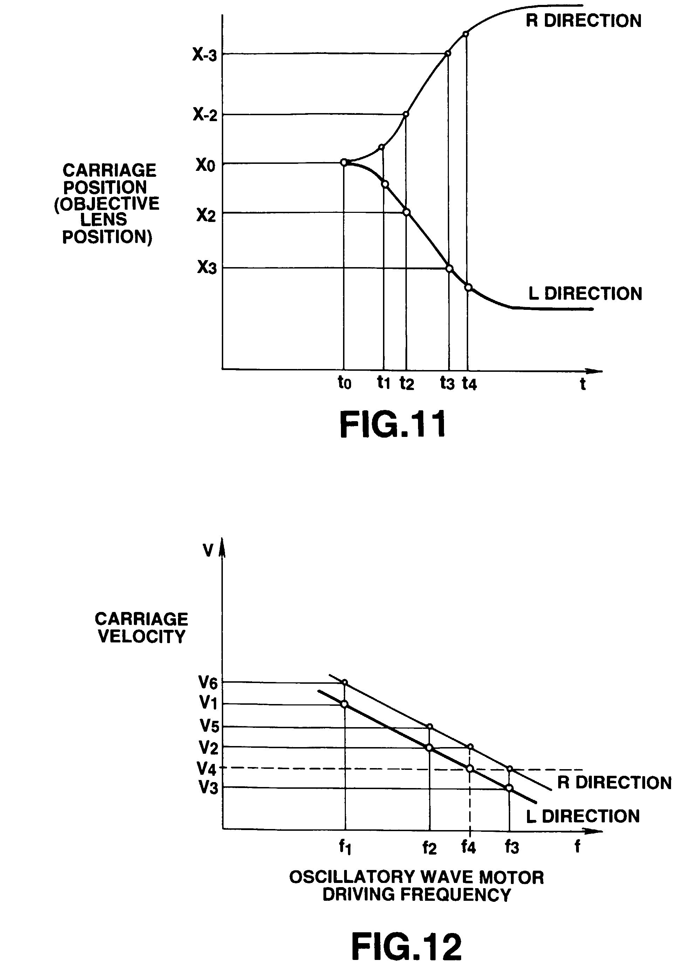

The measurement of the velocity of the carriage 403, and the velocity of the objective lens is explained with reference to Figure 11 and Figure 12. Figure 11 shows the output signals of the objective lens position detection circuit 408 at tracking ON condition, when the carriage 403 moves in the L direction and R direction with a predetermined drive frequency $f_1$ and a predetermined driving voltage amplitude by the oscillatory wave motor 128. As shown in Figure 11, the carriage starts moving in the L direction at time $t_0$ and the objective lens position $x_0$. At $t_2$ after time $t_1$ when a fixed velocity is obtained, $x_2$ is measured by the lens position detection circuit 408. At time $t_3$, $x_3$ is measured. Based on these measurements, the velocity $v_1$ of the carriage in the L direction is obtained as follows.

$$v_1 = (x_3 - x_2) / (t_3 - t_2)$$

The calculation is performed by the MPU 120 using position data received from the lens position detection circuit 408. From time $t_4$, the drive voltage amplitude is gradually reduced to stop the motor slowly so as not to miss the tracking after the measurement.

Then $f_2$ and $f_3$ are adopted as drive frequencies for the oscillatory wave motor 128, and the velocity of the carriage 403 is detected in the same way to obtain velocities $v_2$ and $v_3$ for the L direction of movement of the carriage 403. After the measurement of the L direction velocity, the velocity of the carriage in the R direction is measured using drive frequencies fl, f2 and f3 to obtain carriage velocities v6, v5 and v4.

Figure 12 is a schematic illustration showing the relation between the drive frequency f and the velocity v of the carriage obtained in the aforementioned way. The MPU 120 tabulates and stores the relation between the driving frequency and the velocity for each direction of movement as shown in Figure 12. During ordinary operation, the drive frequency corresponding to a specific velocity for a required direction of movement is obtained from the stored values in the MPU. The obtained drive frequency is supplied to the oscillatory wave motor 128 in the form of velocity control signals.

If the velocity of the carriage is set to $v_4$, referring to the f - v compensation graph of Figure 12, the drive frequency $f_4$ for L direction corresponds to a drive frequency $f_4$ for the R direction. Thus by use of these drive frequencies regardless of the direction of movement of the carriage 403, the carriage 403 can be moved with a desired velocity.

By the way, in this embodiment, as the start of AF is executed on a predetermined region of the tracks on the optical card 9c, subsequent AT starting is executed at the same light beam position. However the start of AF can be executed on a region of the optical card, where there are no tracks. In this case, after the AF starting the carriage has to be moved to a region where there are tracks. And when the oscillatory wave motor makes the carriage move, the drive frequency is set at a predetermined frequency. In this case, as there is an AT OFF condition during the carriage moving period, the range of velocity can be wide.

SECOND EMBODIMENT

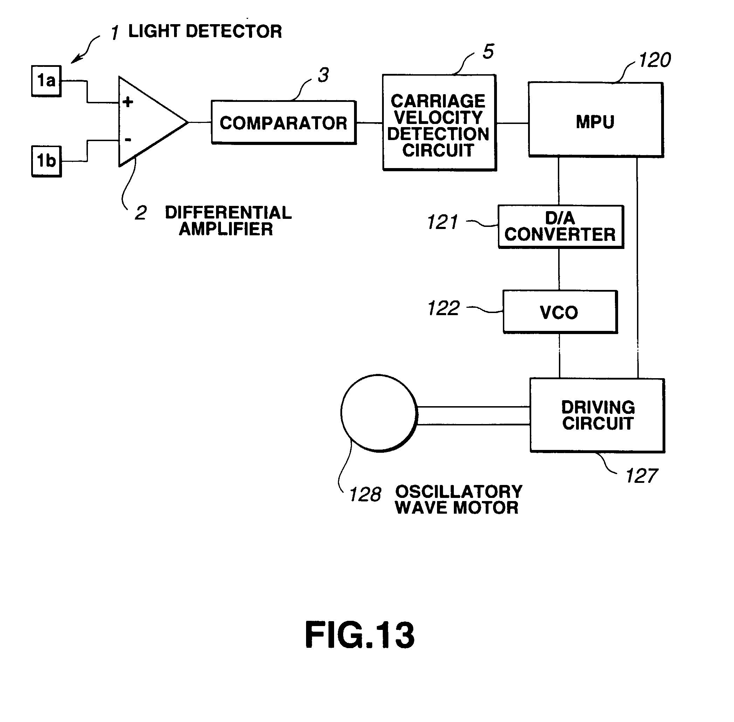

A second embodiment of this invention will now be explained. Figure 13 is a block diagram showing the main structure of an apparatus in accordance with the embodiment. In Figure 13 the same numerals are used to label corresponding parts as in the first embodiment. In Figure 13, 1a, b is a light detector which detects two reflected light spots for tracking control from an optical card produced by a semiconductor laser. The light detector 1 is provided on a fixed optical system 304 as shown in Figure 9. Two light spots for tracking control, in the same way as the first embodiment, are formed for example by dividing a light beam from a semiconductor laser into a main beam and two side beams. The two side beams for tracking control are directed onto two tracking tracks provided on either side of an information track on the optical card.

The light detector 1a, b comprises detection surfaces la and 1b corresponding to the two light spots such that reflected light from the two light spots is detected by the respective detection surfaces 1a and 1b. Detection signals from the detection surfaces 1a and 1b are differentially amplified by a differential amplifier 2 to produce cross track signals each time the main beam crosses an information track as movement of the optical card causes an information track to move in the cross direction in the auto focus condition. The detection signals are converted into binary values at a comparator 3 having a predetermined slice level and input into a carriage velocity detection circuit 5.

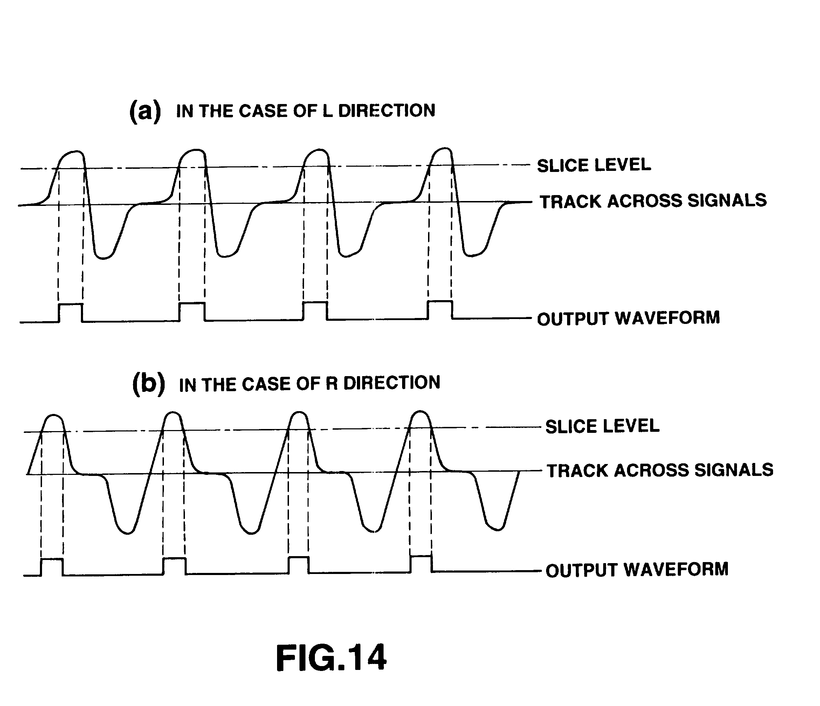

The cross track signals and corresponding binary signals are shown in Figure 14. As the travelling wave excited by the vibrator of the oscillatory wave motor 128 progresses in both directions, there are two possible directions of movement of the carriage perpendicular to the information tracks. The two directions are shown as the L direction and R direction, in respectively Figures 14 (a) and (b).

In Figure 13, the MPU 120 is a microprocessor circuit which controls each part of the apparatus. A carriage velocity detection circuit 5 is arranged to detect the carriage velocity from the signals output by the comparator 3. A D/A convertor 121 converts the digital signals from the MPU 120 into analogue signals which are input into VCO 122. VCO 122 outputs pulse signals of a frequency corresponding to the output voltage from the D/A convertor 122. A drive circuit 127, controls the ON/OFF response of the oscillatory wave motor 128, and produces 90 degree phase shifted signals based on pulse signals from the VCO 122, combines the signals in order to determine the rotative direction of the oscillatory wave motor 128, and produces an adequate voltage to drive the oscillatory wave motor 128.

The oscillatory wave motor 128 moves the carriage carrying the optical card in the cross track direction. The other components of this embodiment of an optical information recording and/or reproducing apparatus are the same as the first embodiment.

The operation of this embodiment will now be explained. Firstly, after an optical card is loaded on the carriage, a light beam from an optical head (not shown) is directed onto an information track on the optical card to set the auto focus ON. Then the MPU 120 measures the velocity of the carriage in the L direction and the R direction to drive the carriage with a desired velocity. The MPU 120 changes the phase of the two phase driving voltage to move the carriage in the L direction, and outputs voltage signals corresponding to pulse signals of the predetermined frequency $f_1$ into the VCO 122 through the D/A convertor 121.

The pulse signals output from the VCO 122 are input into the oscillatory wave motor 128 through the driving circuit 127 as a two phase drive voltage. Then as the oscillatory wave motor 128 starts driving, as the information tracks on the optical card start moving relative to the light beam, the light detectors 1a, 1b output cross track signals. The cross track signals are input into the carriage velocity detection circuit 5 through the comparator 3. When the main beam passes an information track, pulse signals as shown in Figure 14 are input into the carriage velocity detection circuit 5. Therefore the carriage velocity detection circuit 5 calculates a value corresponding to the track width of the optical card divided by the edge intervals of the rising pulses. The velocity of the carriage $V_1$ corresponding to the drive frequency $f_1$ is calculated and input into the MPU 120.

Similar measurements are then executed at drive frequencies $f_2$ and $f_3$ to obtain velocities $V_2$ and $V_3$ corresponding to the L direction drive frequencies $f_2$ and $f_,$. After the measurement of L direction velocity, the R direction velocity is calculated, with velocities $V_0$, $V_5$, $V_4$ corresponding to drive frequencies $f_1$, $f_2$, $f_4$ being obtained in the same way. By means of this operation, the relationship between the drive frequency f and the carriage velocity V shown in Figure 12 is obtained. The MPU 120 tabulates the relationship between the drive frequency and the velocity in the L direction and R direction in a memory in the same way as in the first embodiment.

In ordinary operation, if the velocity of the carriage is going to be set to $V_4$, the MPU 120 calculates the drive frequency $f_4$ for the L direction, and the drive frequency $f_3$ for the R direction based on the f - V compensation characteristic from the measured values as shown in Figure 12. The obtained drive frequency is supplied to the oscillatory wave motor 128. In such a way, the desired carriage velocity is obtained regardless of the direction of movement.

THIRD EMBODIMENT

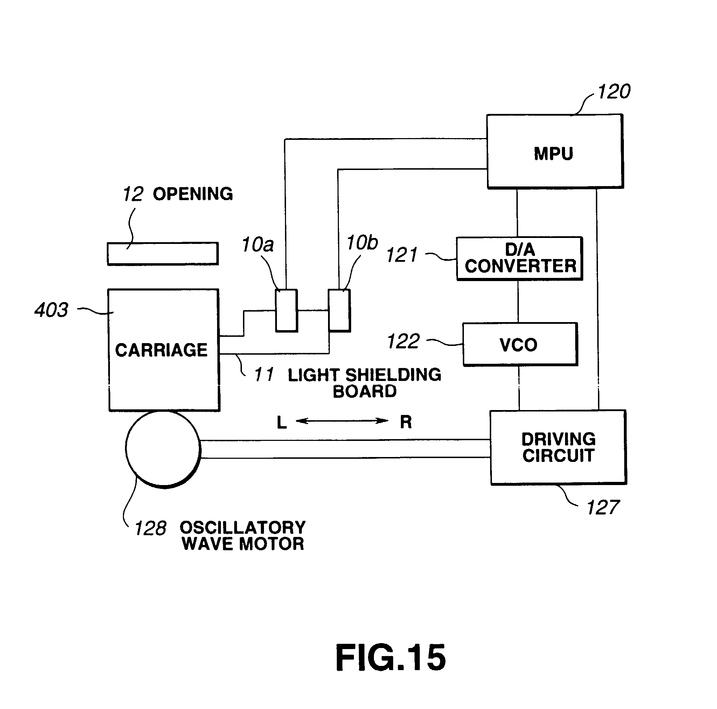

A third embodiment of this invention will now be explained. Figure 15 is a block diagram showing the main structure of an apparatus in accordance with this embodiment, the same numerals being used for corresponding parts as in Figure 13.

MPU 120 is a microprocessor circuit which controls each part of the apparatus. D/A convertor 121 converts digital signals from the MPU 120 into analogue signals and inputs the analogue signals into VCO 122. VCO 122 outputs pulse signals of a frequency corresponding to the output voltage from the D/A convertor 122. Drive circuit 127 controls the ON/OFF operation of the oscillatory wave motor 128, forms 90 degree phase shifted signals based on pulse signals from the VCO 122 and combines the signals in order to determine the rotative direction of the oscillatory wave motor 128, and produces an adequate voltage to drive the oscillatory wave motor 128. Carriage 403 moves in the cross track direction by means of the oscillatory wave motor 128. A optical card is inserted into the apparatus via an opening 12 and loaded on the carriage 403.

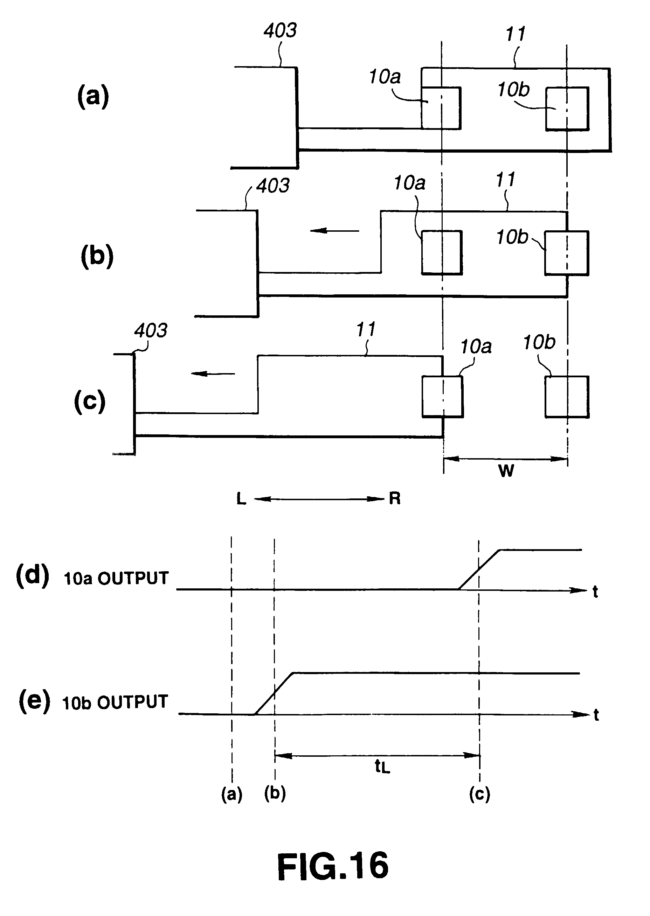

Referring now also to Figure 16, in this embodiment, an "L" shaped light shielding board 11 is fixed on a side of the carriage 403 so as to move in the cross track direction according to movement of the carriage 403. Two photo-detectors 10a, 10b are fixed with a predetermined spacing W. The light shielding board 11 is arranged to pass between a light emitting device (not shown) and the photo-detectors 10a and 10b. The output signals of the photo-detectors 10a and 10b are digitized in a A/D convertor (not shown) and input into the MPU 120. The rest of the apparatus is the same as in the first embodiment.

The positional relation between the light shielding board 11 and the photo-detectors 10a and 10b can be explained with reference to Figure 16. Initially the photo-detectors 10a and 10b are shielded by the light shielding board 11 as shown in Figure 16 (a). Therefore the output of the photo-detectors are at a low level as shown in Figures 16 (d) and (e) at the time point (a).

The oscillatory wave motor 128 is then driven to move the carriage 403 in the L direction, the light shielding board 11 also moving in the L direction. As the right edge of the light shielding board 11 starts to pass by the photo-detector 10b, the light received by the photo-detector 10b from the light emitting device gradually increases and the output of photo-detector 10b increases. If the light shielding board 11 moves to the position shown in Figure 16 (b), the output of the photo-detector 10b increases to a level which is detected by the MPU 120 as a high level. On the other hand, as the photo-detector 10a is shielded from the light emitting device by the light shielding board 11, its output is at a low level as shown in Figure 16 (d) at the time position (b). Thus as the carriage 403 and light shielding board 11 move, the output of the photo-interruptor 10b increases from a low level to a high level. In this embodiment, the position of the light shielding member 11 as shown in Figure 16 (b) corresponds to the "waiting" position of the carriage 403 when the optical card is inserted into the apparatus.

If the light shielding board 11 moves further in the L direction and the right edge of the board 11 starts to pass the photo-detector 10a, the area of the photo-detector 10a intercepting light from the light emitting device gradually increases. The output of the photo-detector 10a increases as shown in Figure 16 (d). If the light shielding board 11 moves to the position shown in Figure 16 (c), the output of the photo-detector 10a reaches to a level which is detected by the MPU 120 as a high level as shown in Figure 16(d) at position (c). In this embodiment the position of the light shielding board 11 of Figure 16 (c), where the output of the photo-interruptor 10a is detected as a high level, is regarded as an initial position where AF is initiated and AF control is executed by an auto focus (AF) control circuit (not shown). In this embodiment, the velocity of the carriage 403 is measured using the photo-detectors 10a and 10b, and the drive frequency of the oscillatory wave motor 128 corresponding to the desired velocity is obtained.

The actual operation of the apparatus of this embodiment will now be explained. After turning on the power for the apparatus, the MPU 120 starts measuring the velocity of the carriage in the L and R cross track directions in order to drive the carriage at a desired velocity. The MPU detects the output levels of the photo-detectors 10a and 10b, and moves the carriage 403 to a position where both output levels are low level, that is to say the light shielding board 11 is located at the position shown in Figure 16 (a). To obtain such a position, the MPU 120 outputs voltage signals corresponding to pulse signals at a predetermined frequency $f_1$ to the VCO 122 through the D/A convertor 121 to drive the oscillatory wave motor 128. The switching of the direction of movement of the carriage 403 is executed by changing phase of the two phase driving voltage of the drive circuit 127.

If the light shielding board 11 is located at the position shown in Figure 16 (a), the MPU 120 changes the phase of the two phase driving voltage of the drive circuit 127 to move the carriage 403 in the L direction, and outputs voltage signals corresponding to pulse signals of frequency $f_1$ to the VCO 122 through the D/A convertor 121. The pulse signals from the VCO 122 are input into the drive circuit 127.

According to this, a two phase drive voltage output by the driving circuit 127 is input into the oscillatory wave motor 128. In such a way, the oscillatory wave motor 128 is driven and the carriage 403 starts moving towards the L direction. If the light shielding board 11 moves to the position shown in Figure 16 (b), and the output of the photo-detector 10b becomes high level, the MPU starts measuring the velocity of the carriage 403. In this case, time measurement is executed by a timer in the MPU 120.

The MPU 120 continues to drive the oscillatory wave motor 128 in order to move the carriage 403 further in the L direction. If the light shielding board 11 moves to the position shown in Figure 16 (c), the output of the photo-detector 10a becomes high level, and the MPU stops measuring the period of the movement. After a predetermined time, the oscillatory wave motor 128 is stopped and the movement of the carriage 403 is finished. The period of movement measured by the MPU 120 is shown in Figure 16 as $t_L$. The MPU 120 calculates the velocity of the carriage 403 by dividing the centre space distance W between the photo-detectors 10a and 10b by the measured moving period $t_L$. The calculated velocity becomes the velocity of the carriage 403 corresponding to the drive frequency $f_1$.

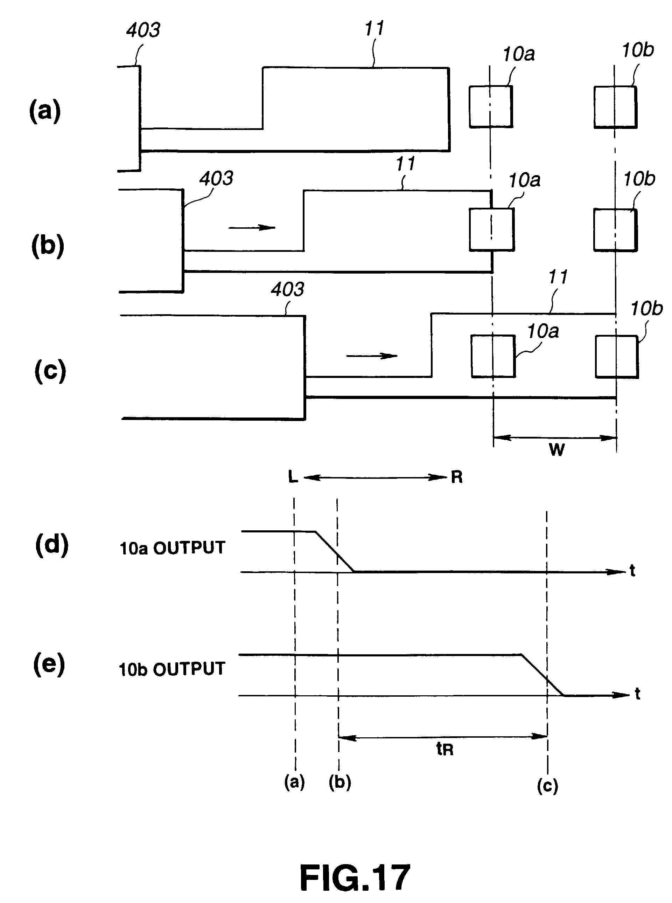

Measurement of the velocity in the R direction is explained based on Figure 17. The MPU 120 changes the phase of the two phase drive voltage of the drive circuit 127 to move the carriage 403 in the R direction from the position shown in Figure 17 (a). The MPU 120 outputs voltage signals corresponding to pulse signals of the frequency $f_1$ to the VCO 122 through the D/A convertor 121. Pulse signals output from the VCO 122 are input into the drive circuit 127. Based on this, the drive circuit 127 drives the oscillatory wave motor 128 to move the carriage 403 in the R direction. In such a way, the light shielding board 11 starts moving from the position shown in Figure 17 (a) to the position shown in Figure 17 (b). When the output of the photo-detector 10a becomes low level as shown at position (b) in Figure 17 (d), the MPU 120 starts measuring the period of movement.

The MPU 120 continues to drive the oscillatory wave motor 128 in order to move the carriage 403 in the R direction. If the light shielding board 11 moves to the position shown in Figure 17 (c), the output of the photo-interruptor 10b becomes low level at position (c) as shown in Figure 17 (e), and the MPU stops measuring the period of movement. After a predetermined time, the MPU 120 stops driving the oscillatory wave motor 128 and moving the carriage 403. The measured period of movement is shown in Figure 17 as $t_R$. The MPU 120 calculates the velocity of the carriage 403 by dividing the centre space distance W between the photo-detectors 10a and 10b by the measured period $t_P$, in the same way as for the L direction. The calculated velocity becomes the velocity for the R direction of the carriage 403 corresponding to the drive frequency $f_1$.

The MPU 120 measures the velocity in the L and R directions for drive frequencies $f_1$ and $f_2$, and calculates the L direction velocities $V_2$, $V_3$ and the R direction velocities $V_5$, $V_4$ corresponding to the drive frequencies. Thus the drive frequency f and carriage velocity V characteristic is obtained as shown in Figure 12 in the same way as the first and second embodiments. The MPU 120 tabulates and stores in a memory the relationship between the drive frequency and the velocity in the L and R directions. In ordinary operation, the MPU refers to a table corresponding to the L and R directions of movement of the carriage 403, and calculates the drive frequency corresponding to a desired velocity for supply to the oscillatory wave motor 128. In such a way, the desired carriage velocity is obtained regardless of the direction of movement.

In the third embodiment, immediately after turning the power on, the measurement of velocity is executed, although this measurement can be adequately executed later. That is to say, in this embodiment, even in the case where the optical card is not in an apparatus, the velocity can be detected. For example, during a waiting time after pulling the card out of the apparatus, the measurement can be executed. In this case, the load change of the oscillatory wave motor based on environmental changes and so on after turning power on can be taken into consideration.

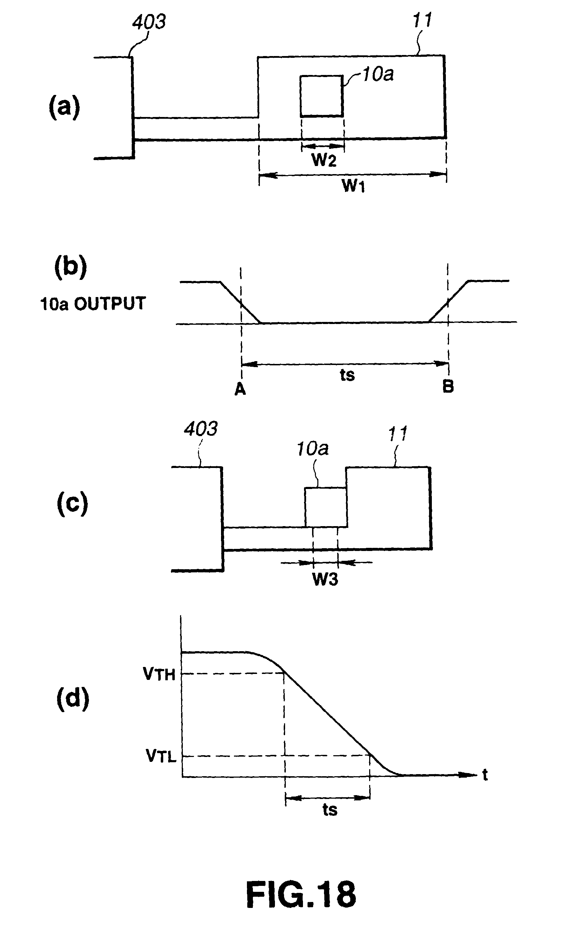

In the third embodiment, the velocity is measured by using two photo-detectors. However, the velocity can be measured by using a single photo-detector as shown in Figure 18 (a). Firstly the time period for which the light shielding board 11 shields the photo-interruptor 10a as shown in Figure 18 (a) is measured, that is to say, $t_5$ which represents the time period between low level output of the photo-interruptor and high level output is measured. Division of a value corresponding to the width $W_1$ of the light shielding board 11 minus the width $W_2$ of the photo-detector 10a, by $t_S$ gives the velocity of the carriage.

The velocity of the carriage can also be obtained as follows. The change of $V_{TH}$ output of the photo-detector 10a is detected from the time at which the photo-detector 10a is not shielded by the light shielding board 11 to $V_{TL}$ at the time at which the photo-detector 10a is completely shielded by the light shielding board 11. Then the time period $t_S$ which corresponds to the linear output change from $V_{TH}$ to $V_{TL}$ (or from $V_{TL}$ to $V_{TH}$) is measured. Dividing the distance W3 where output of the photo-interruptor 10a changes from $V_{TH}$ to $V_{TL}$ by the time period $t_S$ gives the velocity of the carriage.

In the first to the third embodiments, the velocity is measured a number of times for different directions of movement with different velocity control signals. However, in the case in which the inclination of the card to the horizontal can be regarded as fixed, the velocity for each direction is measured using one set of velocity control signals at the drive frequency, and the relation between the velocity control signals for each direction and the velocity can be measured based on the known inclination. In these embodiments, the drive frequency is adopted as velocity control signals of the oscillatory wave motor. However, drive voltage amplitude can be used as well. That is to say, if the drive frequency is fixed, the velocity of the carriage is detected with a changed drive voltage amplitude to obtain a relationship between the drive voltage amplitude and the velocity for each direction of movement.

As mentioned above, in this invention, the relationship between the value of velocity control signals and the value of velocity for each direction of movement along the track is established. Therefore even if the apparatus is set at an inclination, relative movement with a desired velocity can be accurately obtained.

Inconveniences such that the velocity becomes larger during micro moving, and the AT error becoming larger, making recording and reproducing impossible, and the time for seek operation becoming longer, can be prevented. Stable operation of the apparatus can be obtained.

It will be appreciated that whilst the invention has application to an apparatus for reading or writing information on an optical card, the invention is also applicable to apparatus for use with other forms of optical recording media.

Furthermore, whilst it is convenient to cause movement of the lightbeams over the optical card by movement of the recording medium, the invention is also applicable where the relative movement is caused by movement of the optical head.

It will also be appreciated that, whilst the invention has particular application in the correction of the control signals to an oscillating wave motor for moving the card on a direction perpendicular to the tracks in a seek operation including compension for inclination of the optical card, the invention is also useful, for example, for controlling movement along the tracks.

It will be appreciated that the invention is applicable to apparatus in which the carriage is moved by means other than an oscillatory wave motor.

## Claims

1.  An optical apparatus for performing at least one of the functions of recording information on and reproducing information from an optical recording medium (9c) comprising:

    a carriage (403) for carrying the recording medium (9c);
    an optical head for irradiating said medium (9c) with a beam of radiation;
moving means (128) for effecting relative movement of said optical head and said carriage (403) in opposite directions so as to cause said beam of radiation to move in said opposite directions over the recording medium (9c);
control means (406) for controlling said moving means in response to control signals;
means for determining the relationship between the control signals used by said control means (406) and the velocity of the moving means for each of said opposite directions;
and means for modifying said control signals dependent on said relationship.

2.  An apparatus according to claim 1 in which said moving means (128) is an oscillatory wave driving apparatus.

3.  An apparatus according to claim 2, wherein said moving means (128) is an ultrasonic motor.

4.  The apparatus according to any one of claims 1 to 3, wherein said optical head includes an objective lens position detection means (102) for detecting the position of an objective lens (129) used to focus the beam on the medium (9c).

5.  An apparatus according to any one of the preceding claims, in which said opposite directions are transverse to information recording tracks on said medium (9c) and said means for determining is arranged to detect the velocity of the carriage (408) from means for measuring a cycle of cross track signals which occur when said beam of radiation crosses the tracks on said medium (9c) and the track pitch.

6.  The apparatus according to any one of claims 1 to 4, comprising at least one photo-detector (10a,10b) arranged to receive light from a light source, and a shielding means (11) movable with one of said optical head and said carriage (403), said shielding means (11) being arranged to intercept the light path between the light source and the or each photodetector (10a,10b), such that the velocity of the moving means is derivable from the output of the or each photodetector (10a,10b).

7.  A method of effecting relative movement of a beam of radiation and an optical recording medium (9c) comprising the steps of:

    irradiating said medium (9c) with a beam of radiation;
    effecting relative movement of an optical head and the recording medium (9c) in opposite directions so as to cause said beam of radiation to move in said opposite directions over the recording medium (9c);

controlling said relative movement in response to control signals;

determining the relationship between the control signals and the relative velocity of the beam and medium (9c) in each of said opposite directions;

and modifying said control signals dependent on said relationship.

8. A method according to claim 7, in which said relative movement is performed by an oscillatory wave driving apparatus (128).

9. A method according to claim 8, wherein said driving apparatus is an ultrasonic motor (128).

10. The method according to any one of claims 7 to 9, including detecting the position of an objective lens (129) used to focus said beam on the medium (9c).

11. A method according to any one of claims 7 to 10, in which said opposite directions are transverse to information recording tracks on said medium (9c) and said determining step includes detecting the velocity of the carriage (403) by measuring a cycle of cross track signals which occur when said beam of radiation crosses the tracks on said medium (9c) and the track pitch.

12. The method according to any one of claims 7 to 10, wherein said step of determining includes directing light onto at least one photo-detector (10a,10b) and intercepting the light path between the light source and each photo-detector (10a,10b) by a shielding means (11) movable with one of said radiation beam and said medium (9c), such that said relative velocity is derivable from the output of the or each photodetector (10a,10b)

# FIG.1
## PRIOR ART

# FIG.2
## PRIOR ART

**FIG.3**

**PRIOR ART**

**FIG.4**

**PRIOR ART**

# FIG.5
## PRIOR ART

**(a)**

**CARRIAGE POSITION (OBJECTIVE LENS POSITION REFERRING TO OPTICAL HEAD)**

m

$n_1$ — CONDITION A

$n_2$ — CONDITION B

$t_1$  $t_2$  $t_3$  $t_4$  t

**(b)**

**ULTRASONIC MOTOR ON/OFF SIGNALS**

t

**(c)**

**ULTRASONIC MOTOR DRIVING VOLTAGE**

t

**(d)**

**LIGHTBEAM POSITION REFERRING TO TRACK (AT ERROR)**

t

**(e)**

**CARRIAGE VELOCITY (OBJECTIVE LENS MOVING VELOCITY)**

$V_2$

$V_1$

$t_2$  $t_3$  $t_4$  t

$t_1$

# FIG.6
## PRIOR ART

17

FIG.7

FIG.8

FIG.9

**FIG.10**

EP 0 811 970 A2

CARRIAGE
POSITION
(OBJECTIVE
LENS
POSITION)

X-3

X-2

X0

X2

X3

R DIRECTION

L DIRECTION

t0  t1 t2  t3 t4  t

## FIG.11

V

CARRIAGE
VELOCITY

V6
V1
V5
V2
V4
V3

R DIRECTION

L DIRECTION

f1  f2  f4  f3  f

OSCILLATORY WAVE MOTOR
DRIVING FREQUENCY

## FIG.12

FIG.13

EP 0 811 970 A2

**(a)** IN THE CASE OF L DIRECTION

— SLICE LEVEL

— TRACK ACROSS SIGNALS

— OUTPUT WAVEFORM

**(b)** IN THE CASE OF R DIRECTION

— SLICE LEVEL

— TRACK ACROSS SIGNALS

— OUTPUT WAVEFORM

# FIG.14

**FIG.15**

**FIG.16**

**FIG.17**

**FIG.18**